(19) Europäisches Patentamt
European Patent Office
Office européen des brevets

(11) **EP 4 726 530 A1**

(12) **EUROPEAN PATENT APPLICATION**

(43) Date of publication:
**15.04.2026 Bulletin 2026/16**

(21) Application number: **24216354.1**

(22) Date of filing: **29.11.2024**

(51) International Patent Classification (IPC):
**G06F 7/53** $^{(2006.01)}$

(52) Cooperative Patent Classification (CPC):
**G06F 7/53**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **08.10.2024 PL 44997324**

(71) Applicant: **Akademia Gorniczo-Hutnicza im. Stanislawa Staszica w Krakowie 30-059 Krakow (PL)**

(72) Inventors:
- **Jablonski, Janusz**
  **65-557 Zielona Góra (PL)**
- **Dylewski, Robert**
  **66-003 Przytok (PL)**

(74) Representative: **Rybarczyk, Dariusz Pawel et al Polservice Kancelaria Rzecznikow Patentowych sp. z o.o. Bobrowiecka 8 00-728 Warszawa (PL)**

(54) **DIGITAL FOUR-BIT COMBINATIONAL MULTIPLIER CIRCUIT**

(57) The invention relates to a digital 4-bit multiplier circuit for multiplying two arguments (X, Y) represented in binary, implemented on the basis of a scheme comprising basic logic circuits, which is characterized in that it comprises a section of simultaneous generation of products composed of 16 AND gates; a section of sum reductions and carries with the consideration of signal weights, provided for reducing the generated 16 signals, comprising a first half adder (HA1), a first full adder (FA1), a third half adder (HA3), a reduced delay compressor (R4:2), a second full adder (FA2), a second half adder (HA2) and an XOR or OR gate; and a final summing section comprising four full adders (FA3, FA4, FA5, FA6). Based on the unique relationship between the signals representing the partial product values, the circuit of the invention minimizes the time characteristic to a value of T=13 and the conversion area characteristic to a value of A=81, which according to the current state of the art is the lowest AT characteristic for a four-bit multiplier.

Fig. 2

EP 4 726 530 A1

**Description**

**TECHNICAL FIELD**

The subject of the invention is a multiplier circuit for multiplying four-bit numbers being the multiplicand and the multiplier, coded in binary form, built on the basis of a scheme of universal digital logic gates.

**BACKGROUND ART**

Implemented digital systems are built based on circuits with sequential and combinational logic. Digital combinational circuits are built based on schemes comprising connected logic gates operating on discrete values "0" and "1" and performing basic logical operations, such as: logical product (AND, NAND), logical sum (OR, NOR), negation NOT, symmetric difference (XOR). Digital multipliers can be an element of an arithmetic logic unit (ALU) in general-purpose microprocessors and large-scale signal processors (Digital Signal Processor, DSP) dedicated to fast signal processing. An example of a four-bit medium-scale integration circuit multiplier is MC-10181 from Motorola.

The four-bit multiplier circuit of the present invention is intended for circuit digital filters and microprocessors with an arithmetic logic unit (ALU) dedicated to fast multiplication and DSP.

Any digital system can be presented as a connection scheme of logic gates from a set that meets the requirements of a functionally complete system. Functionally complete systems are created, among others, by functors: alternatives as a logical sum (OR) and negation (NOT), negation of conjunction (NAND), negation of an alternative (NOR), as well as exclusive sum (XOR) known as a modulo 2 sum. Different digital circuit schemes can be evaluated by comparing the conversion parameter A (Area) relating to the circuit area and the conversion parameter T (Time) relating to the maximum execution time of the function specified by the given scheme, and the comparison of the efficiency of different circuit schemes can be made based on AT characteristics. It is advantageous to choose for implementation a scheme with the lowest value of the parameter A or T that is important for the given application. The parameter T is important for the speed of the circuit, defining the delay on the longest path from input to output, determined by the conversion number of logic gates. A simple logic gate (AND, OR, NAND, NOR) performs simple logical operations of two input signals and its size is A=1, while the conversion delay (measured as the signal propagation time from input to output) is T=1. For a complex gate (XAND, XNAND, XOR, XNOR) the conversion parameter A=2, and the conversion parameter T=2. For an inverter (NOT), due to the features of CMOS technology, the conversion parameter A=0 and the conversion parameter T=0 are assumed.

Implementations of multipliers can be classified into one of three categories. The first category implements multiplication as a sequential addition $M = X * Y = \sum_{i=1}^{X} Y$ using a multi-position adder and an element that stores the result of subsequent intermediate sums. For a 4-bit size of arguments of multiplication X by $Y$, where $X=\{x_3, x_2, x_1, x_0\}$ and $Y=\{y_3, y_2, y_1, y_0\}$, and $(x_i, y_j)$ are values "0" or "1", a 4-bit multiplication may require 15 addition operations when $Y=\sum_{j=0}^{n-1} 2^j * y_j$ is represented by $Y=\{1, 1, 1, 1\}$. Also, the maximum value may be $X=15$, so the maximum value of the product of 4-bit arguments is 15*15=225, and the result is represented in $\lceil \log_2 225 \rceil = 8$ bits. Therefore, a 4-bit multiplication performed as a multiple summation must take into account the possibility of exceeding the 4-bit size of the result. Exceeding the 4-bit size of the summation result can occur multiple times, and intermediate results can exceed the range of the 4-bit adder already in the first addition operation. Consideration of the range exceeding is signaled by the occurrence of a carry to a lower-order bit position, which must be taken into account in the next addition. Time characteristic of sequential multiplication is proportional to the value of one of the multiplication factors referred to as a multiplier. The T parameter for a 4-bit sequential multiplication would be 15 times the time resulting from the T characteristics of a 7-bit adder. In such a multiplication, the total time T described by the 7-bit adder characteristics of Ts = 16 would be T = 15 * 16 = 240 units. Sequential multiplication, due to the need to take into account carries in subsequent additions and the adder with a bit size larger than the multiplication arguments, is inefficient and, being the slowest of the known multiplication implementations, is not applicable in systems requiring fast multiplication.

The second category of digital multipliers implements a written multiplication algorithm in a matrix multiplication circuit. Matrix multiplication of 4-bit arguments comes down to determining four partial products $\{z_3, z_2, z_1, z_0\}$, where $z_k = x_i$ *Y and determining their sum $Z = \sum_{k=0}^{n-1} 2^k * z_k = \sum_{i=0}^{n-1}(2^i * x_i * Y)$. Each of the partial products requires taking into account its weight resulting from the multiplication $2^k * z_k$. Multiplication by 2 in a binary system is equivalent to a bit shift by one bit towards a bit position of a higher weight. A value of 4 represented in binary as { 1,0,0} when multiplied by 2 returns 2 * 4 = 8, i.e. the result is represented in 4 bits as { 1,0,0,0}. Multiplication matrix is composed of cascaded CSA (Carry-Save-Adder) circuits that simultaneously perform addition with possible carries and bit shift of partial products. The use of CSAs as identical logical blocks in a structure dedicated to matrix multiplication which simultaneously performs addition and carry accumulation allows for faster carry and faster execution of multiplication than in sequential multiplication. In addition, there are noticeable advantages for the implementation of matrix multiplication in a semiconductor circuit resulting from the regularity of the circuit structure. Time characteristics of the matrix multiplier composed of CSA circuits with the carry- related parameters $Tc = 2$ and the sum $Ts = 4$ for 4-bit multiplication is $T = 19$.

The third category of multipliers is based on a written multiplication algorithm adapted to the binary representation of arguments and is implemented in three steps as described in the publication by Jinimol P George et al. entitled "Wallace Tree Multiplier using Compressor" (International Journal of Current Engineering and Technology, Vol.5, No.3, June 2015) hereinafter referred to as "Jinimol's publication". The basis for the multipaction of 4-bit arguments is the determination of four partial products $\{z_3, z_2, z_1, z_0\}$, where $z_k = x_i * Y$ and addition thereof taking into account the bit shift of the generated components. Assuming that Y is a 4-bit argument $\{y_3, y_2, y_1, y_0\}$, four partial products with binary representation $z_k = \{x_i*y_3, x_i*y_2, x_i*y_1, x_i*y_0\}$ will be generated and $Z = \sum_{k=0}^{n-1} 2^k z_k = \sum_{i=0}^{n-1} 2^i x_i * Y$ and Y= $\{y_3, y_2, y_1, y_0\}$, then $Z = X * Y = \sum_{i=0}^{n-1} (2^i x_i * \sum_{j=0}^{n-1} 2^j y_j) = \sum_{i=0}^{n-1} \sum_{j=0}^{n-1} 2^{i+j} (x_i * y_j)$, signals $x_i*y_j$ can be generated simultaneously by a simple digital logic "AND" gate and according to the above Jinimol's publication, it is the first stage of generating a written multiplication result. The determined components $x_i*y_j$ should be added taking into account the weight $2^{i+j}$ of individual bits representing the value of partial products $z_k$. The result of multiplation of four-bit arguments is represented in eight bits $Z = \{z_7, z_6, z_5, z_4, z_3, z_2, z_1, z_0\}$, where the highest weight of the product $x_3*y_3$ is $2^{3+3} = 2^6$, while the weight $2^7$ of bit $z_7$ results from taking into account the carry of the sum of bits $x_3*y_2$ and $x_2*y_3$ with weights of $2^5$, thereby generating a possible carry to the position with a weight of $2^6$, and the result x3*y3 also with a weight of $2^6$, so that the sum of bits with weights od $(2^5+2^5)+2^6 = 2^{5+1}+2^6 = 2^7$ is represented as an 8-bit binary number. The numerical results (25+25)+26 = (32+32)+64 = 128 = $2^7$ confirm the obtained result. Therefore, the second stage of written multiplication according to Jinimol's publication is to produce a result that takes into account the weights of individual products $x_i*y_j$ and the carries resulting from their addtion and reduction of the result representation to two values represented by signals with appropriate weights, which will be added in a two-argument adder as described in Jinimol's publication.

Reduction is performed using digital circuits called compressors and according to Jinimol's publication, these can be compressors of a various number of inputs to an appropriate number of outputs. For implementation of fast multiplication, compressors of three inputs to two outputs are most often used as a 3:2 compressor, most often using a CSA circuit equivalent to the FA circuit. However, in the literature, there are descriptions of 4:2 or 5:2 compressors built as a connection od CSAs. Fast grouping and reduction of partial sums to two arguments in the tree structure of CSA adders was proposed in Christopher Stewart Wallace's publication entitled "A suggestion for a fast multiplier" (IEEE Transactions on Electronic Computers, EC-13 (1): 14-17, February 1964). The last step of fast multiplication consists in adding the signals reduced to two arguments with the same weights in a two-argument adder. Usually, as a two-argument adder, an adder called a carry propagate adder (CPA) is used. The multiplication circuit according to the Jinimol's publication, which is based on the product value reduction structure is characterized by a delay of $T=16$ and a conversion area of $A=84$.

From patent applications US2008/0243976, US2014/0253215, US2017/0161021 digital signal processing systems referred to as DSP (Digital Signal Processors) are known that support circuit multiplication for signal processing and digital filtering.

US2008/0243976 describes a solution of a multiplier circuit based on matrix multiplication referred to as MAC (Multiply and Accumulate) as the most commonly used and intended for DSP. Typical multiplier circuits are composed of basic AND logic gates of a CSA matrix and a final adder CPA composed of serially connected single-position full adders called FA. It is also possible to use PPA circuits faster than CPA (Carry Propagate Adder), referred to as parallel prefix adders. However, for a 4-bit argument size, PPAs will not reduce the delay introduced by a four-bit CPA with characteristics $T = 8$. Therefore, known solutions of multipliers with signal reduction with a weight of $2^3$ using series-connected CSAs as 4:2 or 5:2 compressors give a total conversion delay not less than $T = 15$, while the use of faster adders such as parraller prefix adders will increase the total value of parameter A.

Patent application US2017/0161021 describes an 8-bit multiplication circuit in a digital circuit with a Wallace tree structure using an unusual delay description $d = 1$ corresponding to the standard delay $d = 2T = 2$ for an XOR gate. Then, according to Fig. 5 of this application, it should be taken into account for the 4:2 compressor that $Ts = 6 = 3d$ (as in the publication by Mounir Bohsali et al. entitled "Rectangular Styled Wallace Tree Multipliers"), and for the 3:2 compressor implemented in a CSA system the parameter $Ts = 2d = 4$, and for the HA the parameter $Ts = d = 2$. Moreover, the multiplier described in US2017/0161021 uses a 7:2 compressor reffered to as a 7:2 counter in Fig. 10, with parameter $Ts = 4d = 8$. The 7:2 compressor in the CSA tree structure would be described by parameter $Ts = 5d = 10$. Such a solution allowed to obtain the multiplication time of 8-bit arguments of $T = 14d = 28$. Taking into account the 4:2 compressor systems with a delay of $T_{4:2} = 6$ and the delay of a 4-bit adder composed of four FAs connected in series being $4*Tc = 8$, the total delay of the 4-bit multiplier according to this invention would be not less than $T = T_{4:2} + 4*Tc = 8 + 8 = 16$.

US2014/0253215 describes an 8-bit system multiplication implemented in two steps, where based on the time analysis of logic gates between inputs and output, T = 12 for one step. Therefore, two steps will require a delay of no less than T = 24.

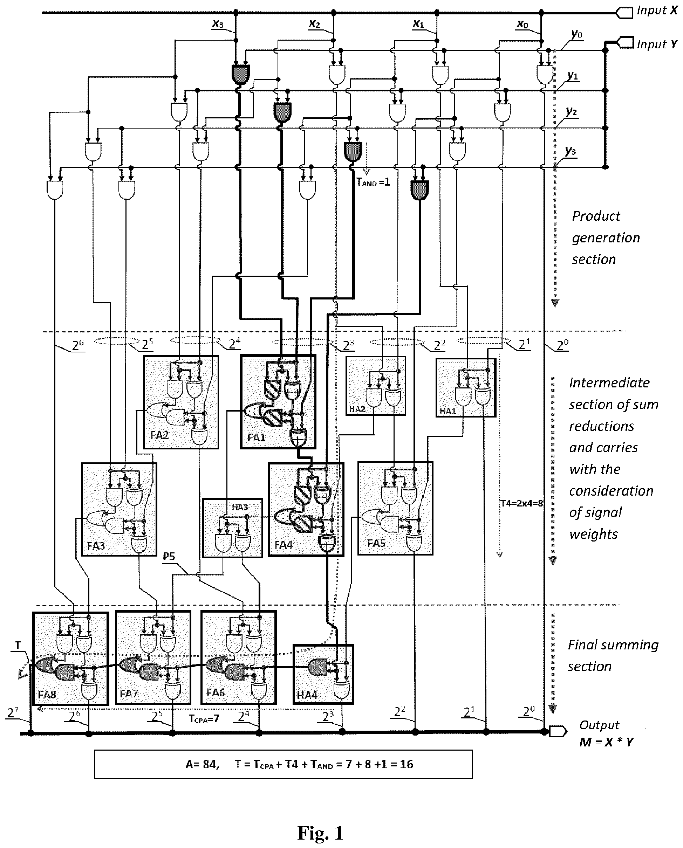

US2008/0243976 refers to a solution of a circuit for multiplying arguments in the two's complement code (U2) which is based on a modified 4-bit multiplier matrix in the scheme shown there in Fig. 1 with parameter T = 15 +1 = 16.

In the patent specifications cited above, 3:2 compressors such as CSA adders were used, as well as dedicated 4:2 compressors and dedicated 5:3 and 7:3 or 7:2 compressors not differing in parameter T from those presented in the study. On the other hand, larger-sized implementations of multipliers are built from 4-bit multipliers, for which the fastest implementations use a combination of CSA and HA, for which the possible minimum delay $T > 15$ is the sum of CPA and the delay introduced by the 4:2 compressor on two CSAs, taking into account the AND gate generating signals of the products $x_i^* y_j$. The object of the invention is to improve the existing structures of multipliers.

## SUMMARY OF THE INVENTION

None of the solutions proposed so far have used the possibility of obtaining a smaller value of the T characteristics based on the dependencies between the values of the input signals used to reduce the number of logic gates influencing the size of the circuit and the time of multiplication execution. It is taken into account that the size of the circuit is described by the A characteristics, while the speed is described by the T characteristics.

It is advantegous for the implementation of a digital 4-bit multiplier circuit to omit the mutually exclusive dependencies between the signals generated by the digital gates intermediate between the X and Y inputs and the Z output, referred to as internal or intermediate signals of the multiplier, obtaining a reduction of the T parameter from the value of T = 16 to the value of T = 13 with a reduction of the A parameter from the value of A = 84 to A = 81 and maintaining the regularity of the digital circuit structure.

The aim of the present invention is to develop a structure of a 4-bit multiplier circuit characterized by a minimum value of the T parameter. The indicated aim is achieved in accordance with the invention by a digital 4-bit multiplier circuit for multiplying two arguments represented in binary, implemented on the basis of a scheme comprising basic logic circuits, characterized in that it comprises a section of simultaneous product generation composed of 16 AND gates, to the inputs of which pairs of signals representing bitwise a first argument (X) and a second argument are supplied from inputs of the arguments to be multiplied, and at the output of which a total of 16 signals are output with different weights of each of the multiplication results. The 4-bit multiplier circuit further includes a section of sum reductions and carries with the consideration of signal weights, provided for reducing the generated 16 signals and comprising a first half adder, to the inputs of which outputs of two AND gates of the product generation section are connected that represent bits with a weight of $2^1$; a first full adder, to the inputs of which outputs of three AND gates of the product generation section are connected that represent bits with a weight of $2^2$; a third half adder, to the inputs of which an output of the carry bit of the first half adder and an output of the sum bit of the first full adder are connected; a compressor having four inputs, to which outputs of four AND gates representing bits with a weight of $2^3$ are connected. The compressor comprises a first compressor stage comprising two AND gates and two XOR gates, to which the compressor inputs are connected in pairs, each of two pairs to one AND gate and one XOR gate; a second compressor stage comprising two pairs of AND and XOR gates, wherein outputs of both AND gates of the first stage are connected to inputs of both AND and XOR gates of the first pair, and outputs of both XOR gates of the first compressor stage are connected to inputs of both AND and XOR gates of the second pair; a third compressor stage comprising an OR gate, the inputs of which are connected to an output of the XOR gate of the first pair and to an output of the AND gate of the second pair of the second compressor stage; wherein an output of the XOR gate of the second pair of the second compressor stage constitutes a first output of the compressor representing a bit with a weight of $2^3$; an output of the OR gate of the third compressor stage constitutes a second output of the compressor representing a bit with a weight of $2^4$, and an output of the AND gate of the first pair of the second compressor stage constitutes a third output of the compressor representing a bit with a weight of $2^5$. The section of sum reductions and carries also includes a second full adder, to the inputs of which outputs of three AND gates of the product generation section are connected that represent bits with a weight of $2^4$; a second half adder, to the inputs of which outputs of two AND gates of the product generation section are connected that represent bits with a weight of $2^5$; an XOR or OR gate, to the inputs of which the third output of the compressor and an output of the sum bit of the second half adder are connected. The 4-bit multiplier circuit further includes a final summing section provided to sum the reduced signals into a result represented in binary on eight bits, comprising a third full adder, to the inputs of which an output of the carry bit of the third half adder, an output of the carry bit of the first full adder and the first output of the compressor are connected; a fourth full adder, to the inputs of which an output of the carry bit of the third full adder, the second output of the compressor, and an output of the sum bit of the second full adder are connected; a fifth full adder, to the inputs of which an output of the carry bit of the fourth full adder, an output of the sum bit of the second full adder, and an output of the XOR or OR gate are connected; a sixth full adder, to the inputs of which an output of the carry bit of the fifth full adder, an output of the carry bit of the second half adder; and an output of an AND gate of the product generation section that represents a bit with a weight of $2^6$.

The 4-bit multiplier circuit finally comprises an output of the multiplication result supplied with: an output of an AND gate of the product generation section representing a bit with a weight of $2^0$; an output of the sum bit of the first half adder representing a bit with a weight of $2^1$; an output of the sum bit of the third half adder representing a bit with a weight of $2^2$; an output of the sum bit of the third full adder representing a bit with a weight of $2^3$; an output of the sum bit of the fourth full adder representing a bit with a weight of $2^4$; an output of the sum bit of the fifth full adder representing a bit with a weight of $2^5$; an output of the sum bit of the sixth full adder representing a bit with a weight of $2^6$ and an output of the carry bit of the sixth full adder representing a bit with a weight of $2^7$.

Assuming, as standard, that the T parameter describes the delay measured by the number of standard gates on the longest path of the signals determining the results, this parameter is referred to as the critical path. In the solution according to the invention, the scheme of the 4-bit multiplier circuit uses mutually exclusive dependencies between the values of the input and intermediate signals and the output signals. It was advantageously used the fact that this specificity covers one case of the values of the multiplication input arguments referring to the relationship that allows for the provision of a multiplication circuit with a smaller number of logic gates on the critical path and obtaining the characteristic value T=13 which is nearly 15% smaller than the previous results, making it possible to obtain a multiplier faster than the solutions discussed in the introduction part and obtaining a nearly 5% smaller conversion area of the circuit by obtaining A=81.

## BRIEF DESCRIPTION OF THE DRAWINGS

The invention will become better understood upon reading the following description with reference to the accompanying drawing, in which:

Fig. 1 shows a 4-bit multiplier circuit constructed based on the techniques disclosed in the prior art;

Fig. 2 shows an embodiment of a 4-bit multiplier circuit with computational acceleration in accordance with the invention.

## DETAILED DESCRIPTION

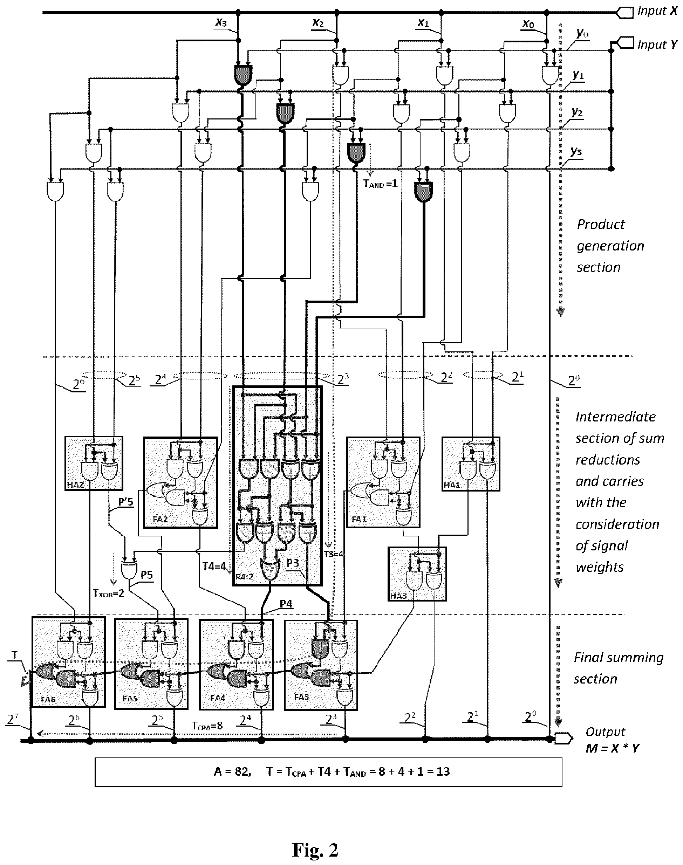

In the present description, a preferred embodiment of the invention is presented with reference to the attached Fig. 2 and in comparison with an implementation of a 4-bit multiplier circuit shown in Fig. 1, resulting from the techniques disclosed in the prior art. The embodiment in Fig. 2 should not be interpreted in a restrictive manner, but merely as an example illustrating the implementation of the solution according to the invention.

Signals indicated in the drawings by lines refer to single- or multi-bit signal lines. Usually, for the needs of fast circuit multiplication, CSA adders or compressors connected in a Wallace structure are used.

Both Fig. 1 and Fig. 2 show schemes of multiplier circuits for multiplying 4-bit numbers, composed of AND, OR, XOR gates. The circuit of Fig. 1 is built based on the techniques described in the Jinimol's publication mentioned in the description of the prior art, while the circuit of Fig. 2 is an implementation according to the invention, in which significant improvements have been introduced with respect to the circuit of Fig. 1, as described in more detail later in the detailed description. Since the schemes of both multiplication circuits are partially convergent, the common parts of both schemes will be described below, and then the differences between both circuits and the distinguishing features of the invention will be explained.

The circuits shown in Figs. 1 and 2 contain three basic sections separated by horizontal dashed lines, which perform successive stages of multiplication: a product generation section, an intermediate section of sum reductions and carries with the consideration of signal weights, and a final summing section.

The product generation section comprises two inputs of the circuit, designated in figures 1 and 2 as *Input X* and *Input Y*, to which 4-bit arguments intended for multiplication are supplied, the so-called multiplicand and multiplier designated as X and Y, wherein $X=\{x_3, x_2, x_1, x_0\}$, $Y=\{y_3, y_2, y_1, y_0\}$. Partial products are determined by 16 AND gates, to the inputs of which pairs of signals $x_3, x_2, x_1, x_0; y_3, y_2, y_1, y_0$ with individual weights are supplied. The AND gates produce at their outputs a total of 16 signals with different weights of each of the results of the partial multiplication, including one signal with a weight of $2^0$, two signals with a weight of $2^1$, three signals with a weight of $2^2$, four signals with a weight of $2^3$, three signals with a weight of $2^4$, two signals with a weight of $2^5$, and one signal with a weight of $2^6$, which are appropriately designated in the figures individually or collectively using loops.

In the intermediate section of sum reductions and carries with the consideration of signal weights, outputs of the mentioned AND gates (except for the output representing the weight $2^0$ fed directly to the output and the output representing the weight $2^7$ fed to the final summing section) are fed and connected to inputs of previously assigned adders, each of which performs the adding of bits with equal weights. The purpose of this stage is to sum or reduce to a form that can be added in a two-argument multi-position adder. So-called single-bit half adders (HA) are used for summing, that add two bits without taking into account the carries, and full-adders (FA) that add two bits with the carries. Both types of adders and their construction are well known in the art, therefore, for the sake of clarity, additional explanation is omitted.

In both circuits shown in Fig. 1 and Fig. 2, half adders designated with the reference HA and an ordinal number (HA1, HA2, etc.), and full adders designated with the reference FA and an ordinal number (FA1, FA2, etc.) are used. In each of the figures, the ordinals assigned to the designations HA and FA are independent, i.e. the same designations in each of the figures can indicate a different adder.

The differences between the circuits shown in Figs. 1 and 2 will be described in the following.

In the approach shown in Fig. 1, which is consistent with the techniques described in the aforementioned publication and results directly from them, in the intermediate section of sum reductions and carries with the consideration of signal weights:

- for adding bits with a weight of $2^1$, an half adder HA1 is used, the inputs of which are supplied with outputs of two AND gates, and the sum bit of which indicates the final value of the bit with a weight of $2^1$;

- for adding bits with a weight of $2^2$, a half adder HA2 is used, the inputs of which are supplied with outputs of two AND gates of the product generation section, and a full adder FA5, the inputs of which are supplied with: the carry bit of the half adder HA1, an output of the AND gate of the product generation section and the sum bit of the half adder HA2, wherein the sum bit of the full adder FA5 indicates the final value of a bit with a weight of $2^2$;

- for adding bits with a weight of $2^3$, a full adder FA1 is used, the inputs of which are supplied with outputs of three AND gates of the product generation section, and a full adder FA4, the inputs of which are supplied with: the carry bit of the half adder HA2, an output of the AND gate of the product generation section and the sum bit of the full adder FA1, where the outputs of the carry bits of the full adders FA1 and FA4 are supplied to inputs of the half adder HA3;

- for adding bits with a weight of $2^4$, a full adder FA2 is used, the inputs of which are supplied with outputs of three AND gates of the product generation section;

- for adding bits with a weight of $2^5$, a full adder FA3 is used, the inputs of which are supplied with: the carry bit of the full adder FA2 and outputs of two AND gates of the product generation section.

The final summing section in Fig. 1 includes a half adder HA4 and three full adders FA6, FA7, FA8, which perform the final adding. The following final signals are supplied to an output M, which produces an 8-bit output value of the multiplication X*Y:

- from an output of an AND gate of the product generation section for a bit with a weight of $2°$;

- from an output of the sum bit of the half adder HA1 for a bit with a weight of $2^1$;

- from an output of the sum bit of the full adder FA5 for a bit with a weight of $2^2$;

- from an output of the sum bit of the half adder HA4 of the final summing section, the inputs of which are supplied with the carry bit of the full adder FA5 and the sum bit of the full adder FA4, for a bit with a weight of $2^3$;

- from an output of the sum bit of the full adder FA6 of the final summing section, the inputs of which are supplied with the carry bit of the half adder HA4, the sum bit of the half adder HA3, and the sum bit of the full adder FA2, for a bit with a weight of $2^4$;

- from an output of the sum bit of the full adder FA7 of the final summing section, the inputs of are supplied witj the carry bit of the full adder FA6, the carry bit of the half adder HA3, and the sum bit of the full adder FA3, for a bit with a weight of $2^5$;

- from an output of the sum bit of the full adder FA8 of the final summing section, the inputs of which are supplied with the carry bit of the full adder FA7, the carry bit of the full adder FA3, and an output of an AND gate of the product generation section, for a bit with a weight of $2^6$;

- from an output of the carry bit of the full adder FA8 for a bit with a weight of $2^7$.

The circuit of Fig. 1 is characterized by parameters A = 84 and T = 16, which result from the number and types of logic gates used and the delays characterizing the path marked with a dotted line, respectively.

In contrast to the multiplier circuit shown in Fig. 1, in the multiplier circuit according to the invention shown in Fig. 2, advantageous improvements have been introduced consisting in the use of a specially developed compressor R4:2 for four signals with a weight of $2^3$ and an appropriate selection of the structure of adders and their mutual dependencies, in order to significantly improve the parameters A and T of the circuit.

In the approach shown in Fig. 2, which is in accordance with the present invention, in the intermediate section of sum reductions and carries with the consideration of signal weights:

- for adding bits with a weight of $2^1$, an half adder HA1 is used, the inputs of which are supplied with outputs of two AND gates of the product generation section, and the sum bit of which indicates the final value of a bit with a weight of $2^1$;

- for adding bits with a weight of $2^2$, a full-adder FA1 is used, the inputs of which are supplied with outputs of three AND gates of the product generation section;

- for adding bits with a weight of $2^3$, a compressor R4:2 (described later) is used, the inputs of which are supplied with outputs of four AND gates of the product generation section;

- for adding bits with a weight of $2^4$, a full adder FA2 is used, the inputs of which are supplied with outputs of three AND gates of the product generation section;

- for adding bits with a weight of $2^5$, a half adder HA2 is used, the inputs of which are supplied with outputs of two AND gates of the product generation section.

The compressor R4:2 used in the invention has three stages described below. The first stage comprises two AND gates and two XOR gates, to which the compressor inputs are connected in pairs, each of the two pairs to one AND gate and one XOR gate. The second compressor stage comprises two pairs of AND and XOR gates, wherein outputs of both AND gates of the first compressor stage are connected to inputs of both AND and XOR gates of the first pair, and outputs of both XOR gates of the first compressor stage are connected to inputs of both AND and XOR gates of the second pair. The third compressor stage comprises an OR gate, the inputs of which are connected to an output of the XOR gate of the first pair and to an output of the AND gate of the second pair of the second compressor stage. An output of the XOR gate of the second pair of the second compressor stage constitutes a first output of the compressor representing a bit with a weight of $2^3$; an output of the OR gate of the third compressor stage constitutes a second output of the compressor representing a bit with a weight of $2^4$, and an output of the AND gate of the first pair of the second compressor stage constitutes a third output of the compressor representing a bit with a weight of $2^5$. The third output of the compressor and an output of the sum bit of the half adder HA2 are connected to the inputs of an XOR gate.

Although it is not shown in Fig. 2, the XOR gate in path P5 can also be replaced by an OR gate, which is characterized by a lower value of parameter A = 1 and allows to reduce the parameter A of the entire circuit to the value of 81.

In the final summing section in Fig. 2, four full adders FA3, FA4, FA5 and FA6 are used, each of which adds bits with appropriate weights supplied from the intermediate section of sum reduction and carries with the consideration of signal weights:

- the carry bit of the half adder HA3, the carry bit of the full adder FA1 and the first output of the compressor R4:2 are supplied to inputs of the full adder FA4;

- the carry bit of the full adder FA3, the second output of the compressor R4:2 and the sum bit of the full adder FA2 are supplied to inputs of the full adder FA5;

- the carry bit of the full adder FA4, the carry bit of the full adder FA2 and an output of the XOR gate are supplied to inputs of the full adder FA6;

- the carry bit of the full adder FA5, the carry bit of the half adder HA2 and an output of an AND gate of the product generation section are supplied to inputs of the full adder FA6.

The final signals for a bit with a weight of $2^0$ from the AND gate of the product generation section, for bits with weights of $2^1$ and $2^2$ from outputs of the half adders HA1 and HA3, and for bits with weights of $2^3$, $2^4$, $2^5$, $2^6$, and $2^7$ from outputs of the full adders FA3, FA4, FA5, and FA6 are supplied to an output M, which produces an 8-bit multiplication output X*Y.

Fig. 2 shows the delays introduced by the AND gate, for which $T_{AND} = 1$, the delays introduced by the XOR gate, for which $T_{XOR} = 2$, as well as the delay introduced by the four-bit CPA adder, for which $T_{CPA} = 8$. Furthermore, there are indicated the delays of generating P3 signals introduced by the combined two XOR gates giving T3 = 4, and for the P4 signal the delay T4 = 4 and for the P5 signal the delay T5 = 3, therefore the total delay is $T = T_{CPA} + T_3 + T_{AND} = 8 + 4 + 1 = 13$ and the conversion area of the circuit is A = 82, which can be further reduced to the value A = 81 in the case of replacing the XOR gate in the P5 path by an OR gate.

Using the fact that there is only one combination of input signals that causes the generation of four "1" values of signals with a weight of $2^3$, it is possible to detect this case of generating the signal marked in Fig. 2 as P5 with a weight of $2^5$ using a circuit consisting of two levels of AND gates with delay T = 2 and one XOR gate with delay T = 2, giving a total delay of generating the signal P5 of T5 = 4. The solution scheme shown in Fig. 2 replaces the known reduction in the ratio 4:3 and then 3:2 with a delay of signals with a weight of $2^3$ of minimum T = 6, known from using two levels of CSAs, to generate signals P3, P4 and P5 with a delay not greater than T = 4.

When implementing the present invention, it was noticed that the multiplication of 4-bit arguments with values X = 15 and Y = 15, produces the result of multiplication Z = X * Y = 15 * 15 = 225. Therefore, for binary represented X={ 1,1,1,1} and Y={ 1,1,1,1} all input signals of AND gates performing bitwise multiplication $x_i{}^*y_j$ assume high logical state "1". Then, signal P'5 assumes logical value "0", and signal P5 assumes value "1". Therefore, signal P5 assumes value " 1" only for one special case of input data. Using this dependency allows faster generation of signals P4 and P3.

It is advantageous to note that for a special case of argument values, all signals $x_i{}^*y_j$ have the value "1", therefore, when all of the four products $x_0{}^*y_3$, $x_1{}^*y_2$, $x_2{}^*y_1$, $x_3{}^*y_0$ with weights of $2^3$ have the value "1", then three products $x_1{}^*y_3$, $x_2{}^*y_2$, $x_3{}^*y_1$ with weights of $2^4$ take the value "1" and it is advantageous that two products $x_2{}^*y_3$, $x_3{}^*y_2$ with weights of $2^5$ also take the value "1", therefore, the determination of the intermediate signal with a weight of $2^5$, marked in Fig. 2 as P5, will occur at time T= 4, while the determination of the value of the signal with a weight of $2^4$, marked as P4 in Fig. 1, will occur after time T=5, similarly as the determination of the signal with a weight of $2^3$, marked as P3 in Fig. 1, will occur at time T=5. Advantageously, the circuit shown in Fig. 2 will determine the product signals $Z = X * Y$ with a total delay not exceeding T = 5 + 8 = 13 in a circuit with a conversion area of A = 82 (or A = 81 in the case of replacing the XOR gate in the path P5 with an OR gate). Thus, advantageously, the resulting delay is approximately 15% smaller than in other known solutions in a circuit with nearly 5% less conversion area.

The present invention minimizes the number of logical states on the critical path of a 4-bit digital multiplier circuit. Accordingly, the invention provides a useful, concrete and real result.

Although the invention has been shown in the drawings and in the description with reference to preferred embodiments, these examples do not suggest any limitations of the present invention. It is obvious that changes can be made without departing from the spirit of the invention. The disclosed preferred embodiments are merely illustrative and do not exhaust the scope of the invention presented.

Accordingly, the scope of protection is not limited to the described preferred embodiments, but is limited by the appended claim.

## Claims

1. digital 4-bit multiplier circuit for multiplying two arguments (X, Y) represented in binary, implemented on the basis of a scheme comprising basic logic circuits, **characterized in that** it comprises:

   - a section of simultaneous product generation composed of 16 AND gates, to the inputs of which pairs of signals $(x_3, x_2, x_1, x_0; y_3, y_2, y_1, y_0)$ representing bitwise a first argument (X) and a second argument (Y) are supplied from inputs (Input X, Input Y) of the arguments to be multiplied, and at the output of which a total of 16 signals are output with different weights of each of the multiplication results,
   - a section of sum reductions and carries with the consideration of signal weights, provided for reducing the generated 16 signals and comprising:

      - a first half adder (HA1), to the inputs of which outputs of two AND gates of the product generation section are connected that represent bits with a weight of $2^1$;
      - a first full adder (FA1), to the inputs of which outputs of three AND gates of the product generation section are connected that represent bits with a weight of $2^2$;
      - a third half adder (HA3), to the inputs of which an output of the carry bit of the first half adder (HA1) and an output of the sum bit of the first full adder (FA1) are connected;
      - a compressor (R4:2) having four inputs, to which outputs of four AND gates representing bits with a weight of $2^3$ are connected, wherein the compressor (R4:2) comprises:

         a first compressor stage comprising two AND gates and two XOR gates, to which the compressor inputs are connected in pairs, each of two pairs to one AND gate and one XOR gate;

a second compressor stage comprising two pairs of AND and XOR gates, wherein outputs of both AND gates of the first stage are connected to inputs of both AND and XOR gates of the first pair, and outputs of both XOR gates of the first compressor stage are connected to inputs of both AND and XOR gates of the second pair;

a third compressor stage comprising an OR gate, the inputs of which are connected to an output of the XOR gate of the first pair and to an output of the AND gate of the second pair of the second compressor stage;

wherein an output of the XOR gate of the second pair of the second compressor stage constitutes a first output of the compressor representing a bit with a weight of $2^3$; an output of the OR gate of the third compressor stage constitutes a second output of the compressor representing a bit with a weight of $2^4$, and an output of the AND gate of the first pair of the second compressor stage constitutes a third output of the compressor representing a bit with a weight of $2^5$,

- a second full adder (FA2), to the inputs of which outputs of three AND gates of the product generation section are connected that represent bits with a weight of $2^4$;
- a second half adder (HA2), to the inputs of which outputs of two AND gates of the product generation section are connected that represent bits with a weight of $2^5$;
- an XOR or OR gate, to the inputs of which the third output of the compressor (R4:2) and an output of the sum bit of the second half adder (HA2) are connected;

- a final summing section provided to sum the reduced signals into a result (M = X*Y) represented in binary on eight bits, comprising:

- a third full adder (FA3), to the inputs of which an output of the carry bit of the third half adder (HA3), an output of the carry bit of the first full adder (FA1) and the first output of the compressor (R4:2) are connected;
- a fourth full adder (FA4), to the inputs of which an output of the carry bit of the third full adder (FA3), the second output of the compressor (R4:2), and an output of the sum bit of the second full adder (FA2) are connected;
- a fifth full adder (FA5), to the inputs of which an output of the carry bit of the fourth full adder (FA4), an output of the sum bit of the second full adder (FA2), and an output of the XOR or OR gate are connected;
- a sixth full adder (FA6), to the inputs of which an output of the carry bit of the fifth full adder (FA5), an output of the carry bit of the second half adder (HA2); and an output of an AND gate of the product generation section that represents a bit with a weight of $2^6$;
- an output (output M) of the multiplication result supplied with:

- an output of an AND gate of the product generation section representing a bit with a weight of $2^0$;
- an output of the sum bit of the first half adder (HA1) representing a bit with a weight of 21;
- an output of the sum bit of the third half adder (HA3) representing a bit with a weight of $2^2$;
- an output of the sum bit of the third full adder (FA3) representing a bit with a weight of 23;
- an output of the sum bit of the fourth full adder (FA4) representing a bit with a weight of $2^4$;
- an output of the sum bit of the fifth full adder (FA5) representing a bit with a weight of $2^5$;
- an output of the sum bit of the sixth full adder (FA6) representing a bit with a weight of $2^6$ and - an output of the carry bit of the sixth full adder (FA6) representing a bit with a weight of $2^7$.

Fig. 1

Fig. 2

Europäisches
Patentamt
European
Patent Office
Office européen
des brevets

# EUROPEAN SEARCH REPORT

**Application Number**

EP 24 21 6354

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 3 926 461 A1 (DIGITAL CORE DESIGN SP Z O O SP K [PL]) 22 December 2021 (2021-12-22) * paragraphs [0008] - [0011], [0028] - [0030]; figures 1, 2, 4 * ----- | 1 | INV. G06F7/53 |
| A | US 5 912 832 A (FLAHIE MICHAEL F [US] ET AL) 15 June 1999 (1999-06-15) * column 7, line 18 - line 35; figure 14 * ----- | 1 | |

**TECHNICAL FIELDS SEARCHED (IPC)**

G06F

The present search report has been drawn up for all claims

| Place of search | Date of completion of the search | Examiner |
|---|---|---|
| Munich | 28 April 2025 | Prins, Leendert |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 21 6354

This annex lists the patent family members relating to the patent documents cited in the above-mentioned European search report.
The members are as contained in the European Patent Office EDP file on
The European Patent Office is in no way liable for these particulars which are merely given for the purpose of information.

28-04-2025

| Patent document cited in search report | | Publication date | Patent family member(s) | | Publication date |
|---|---|---|---|---|---|
| EP 3926461 | A1 | 22-12-2021 | NONE | | |
| US 5912832 | A | 15-06-1999 | AU | 4431997 A | 02-04-1998 |
| | | | US | 5912832 A | 15-06-1999 |
| | | | WO | 9811481 A1 | 19-03-1998 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20080243976 A
- US 20140253215 A

- US 20170161021 A

**Non-patent literature cited in the description**

- **JINIMOL P GEORGE et al.** Wallace Tree Multiplier using Compressor. *International Journal of Current Engineering and Technology*, June 2015, vol. 5 (3)

- **CHRISTOPHER STEWART WALLACE'S**. A suggestion for a fast multiplier. *IEEE Transactions on Electronic Computers*, February 1964, vol. 13 (1), 14-17
- **MOUNIR BOHSALI et al.** *Rectangular Styled Wallace Tree Multipliers*